Europäisches Patentamt

European Patent Office

Office européen des brevets

(19)

(11) Veröffentlichungsnummer: **0 103 674**
**B1**

(12) **EUROPÄISCHE PATENTSCHRIFT**

(45) Veröffentlichungstag der Patentschrift:
**12.08.87**

(21) Anmeldenummer: **83104711.3**

(22) Anmeldetag: **13.05.83**

(51) Int. Cl.⁴: **C 01 C 1/10**, C 02 F 1/58,
B 01 D 19/00, B 01 D 3/14

(54) **Verfahren und Vorrichtung zum Abtreiben von freiem und gebundenem Ammoniak aus diese beiden Bestandteile enthaltenden wässrigen Lösungen.**

(30) Priorität: **26.08.82 DE 3231757**

(43) Veröffentlichungstag der Anmeldung:
**28.03.84 Patentblatt 84/13**

(45) Bekanntmachung des Hinweises auf die Patenterteilung:
**12.08.87 Patentblatt 87/33**

(84) Benannte Vertragsstaaten:
**BE DE FR NL**

(56) Entgegenhaltungen:
**FR-A-2 384 721**
**FR-A-2 484 390**

(73) Patentinhaber: **Krupp Koppers GmbH, Altendorfer Strasse 120, D-4300 Essen 1 (DE)**

(72) Erfinder: **Rizzon, John, Memmertweg 2, D-4300 Essen 1 (DE)**
Erfinder: **Diemer, Peter, Dr. Dipl.- Ing., Schliepersberg 2, D-4300 Essen 1 (DE)**

### Beschreibung

Verfahren und Vorrichtung zum Abtreiben von freiem und gebundenem Ammoniak aus diese beiden Bestandteile enthaltenden wässrigen Lösungen.

Die Erfindung betrifft ein Verfahren zum Abtreiben von freiem und gebundenem Ammoniak aus diese beiden Bestandteile enthaltenden wässrigen Lösungen, wobei das gebundene Ammoniak durch Behandlung mit Natronlauge in Freiheit gesetzt und das freie Ammoniak mit Wasserdampf und/oder Brüden aus der Lösung abgetrieben wird und wobei das Verfahren in mit geeigneten Einbauten versehenen Kolonnen durchgeführt wird.

Wässrige Lösungen, die freies und gebundenes Ammoniak enthalten, fallen als Abwasser bei verschiedenen chemischen Verfahren und Waschprozessen an. Hierbei stellen insbesondere die sogenannten Kokereiwässer, die bei der Auswaschung von Ammoniak aus dem Koksofengas anfallen, ein Beispiel für eine derartige wässrige Lösung dar. Wegen ihres Ammoniakgehaltes können derartige Lösungen einerseits nicht ohne weiteres als Abwasser abgestossen werden. Andererseits ist man auch in vielen Fällen bestrebt, den Ammoniakgehalt derartiger Lösungen möglichst vollständig zurückzugewinnnen, um danach die regenerierte Lösung wieder im Verfahren nutzen zu können. So ist es beispielsweise bei Kokereiwässern bekannt, den Ammoniakgehalt der beladenen Lösung mit Wasserdampf abzutreiben und ihn daran anschliessend wirtschaftlich zu nutzen bzw. ihn durch Verbrennung zu vernichten. Dabei wird der Abtrieb des Ammoniaks in der Regel in zwei mit Einbauten (Böden) versehenen Kolonnen vorgenommen, die entweder gleichzeitig mit der zu behandelnden Einsatzlösung beschickt werden oder von dieser nacheinander durchflossen werden. Der Abtrieb des in der Einsatzlösung enthaltenen freien Ammoniaks erfolgt dabei durch den von unten in die Kolonnen eingeleiteten Wasserdampf oder Brüden, der im Gegenstrom zur Einsatzlösung in der Kolonne aufsteigt. Der Abtrieb des gebundenen Ammoniaks wird in der Weise bewerkstelligt, dass normalerweise in der zweiten Kolonne eine stark alkalisch reagierende Lösung, wie z. B. Natronlauge, zugesetzt wird, wodurch das gebundene Ammoniak in Freiheit gesetzt wird und danach ebenfalls durch Wasserdampf oder Brüden abgetrieben werden kann. Es liegt jedoch auf der Hand, dass diese Arbeitsweise mit zwei Kolonnen relativ hohe Anlagekosten verursacht, zumal wegen des Arbeitens mit stark alkalischen Reagenzien, wie sie die Natronlauge nun einmal darstellt, beide Kolonnen mit einer entsprechenden Schutzauskleidung versehen sein müssen.

Der Erfindung liegt deshalb die Aufgabe zugrunde, ein Verfahren zum Abtreiben von freiem und gebundenen Ammoniak aus diese Bestandteile enthaltenden wässrigen Lösungen zu schaffen, das einen geringeren apparative Aufwand erfordert als die bisher bekannten Verfahren und sich gleichzeitig durch niedrige Betriebskosten und eine hohe Flexibilität auszeichnet.

Das der Lösung dieser Aufgabe dienende Verfahren der eingangs genannten Art ist gekennzeichnet durch die Anwendung folgende Verfahrensmerkmale:

a) Die Behandlung der ammoniakhaltigen Einsatzlösung erfolgt in einer einzigen, aus drei Teilen bestehenden Kolonne, deren erster (oberster) Teil und darunterliegender zweiter Te durch einen gas- und flüssigkeitsdurchlässigen Boden miteinander in Verbindung stehen, während der zweite und der dritte Teil durch einen undurchlässigen Boden voneinander getrennt sind;

b) die ammoniakhaltige Einsatzlösung wird a Kopf der Kolonne in den ersten Teil derselben eingeleitet und nach Passieren des ersten Teile: in zwei Teilströme zerlegt, von denen der eine Teilstrom unmittelbar in den darunter liegender zweiten Teil der Kolonne fließt, während der andere Teilstrom über eine Umgehungsleitung direkt auf den dritten Teil der Kolonne aufgegeben wird, wobei der Abtreibedampf in den dritten und zweiten Teil der Kolonne eingeleitet wird sowie im zweiten Teil zusätzlich die Aufgabe von Natronlauge erfolgt, und

c) die im dritten Teil der Kolonne aufsteigenden Brüden werden über eine Umgehungsleitung in den zweiten oder in den ersten Teil derselben eingeleitet, während die aus dem dritten Teil der Kolonne ablaufende regenerierte Lösung einer Wiederverwendung zugeführt und die aus dem zweiten Teil ablaufende Lösung nach entsprechender Abwasserbehandlung aus dem Verfahren abgestoßen wird.

Das heißt, beim erfindungsgemäßen Verfahre erfolgt die Behandlung der ammoniakhaltigen Einsatzlösung nur noch in einer einzigen aus dre Teilen bestehenden Kolonne, in der sowohl das freie als auch das gebundene Ammoniak in Freiheit gesetzt werden. Hierbei wird allerdings erfindungsgemäß nur ein Teil der insgesamt auf die Kolonne aufgegebenen Einsatzlösung einer Behandlung mit Natronlauge unterworfen, wodurch das gebundene Ammoniak in Freiheit gesetzt wird. Nach Abtrieb des freien und gebundenen Ammoniaks wird dieser Teil der Einsatzlösung einer Abwasserbehandlung zugeführt und daran anschließend aus dem Verfahren abgestoßen. Der Teil der Einsatzlösung, der dagegen einer Wiederverwendung zugeführt werden soll, wird keiner Behandlung mit Natronlauge unterworfen In diesem Teil der Einsatzlösung wird durch die Behandlung mit Abtreibedampf und Brüden lediglich das freie Ammoniak aus der Lösung abgetrieben. Hierbei kann nach den Gegebenheiten der Praxis die Aufteilung der beiden Teilströme frei gewählt werden, wobei es in erster Linie darauf ankommt, wie groß einerseits der Anteil der Einsatzlösung sein soll, der einer Wiederverwendung zugeführt werden soll und wie groß andererseits der Anteil der Einsatzlösung sein kann, der aus dem Verfahren abgestoßen werden darf. Im Normalfall wird man davon ausgehen können, daß dieser zuletzt genannte Anteil, der dementsprechend einer Behandlung mit Natronlauge unterworfen wird, bei etwa 50 bis 65 Vol-% der insgesamt aufgegebenen Einsatzlösung liegt.

Weitere Einzelbeiten der Erfindung ergeben sich aus den vorliegenden Unteransprüchen und sollen an Hand der Abbildungen näher erläutert werden. Hierbei zeigen:

Fig. 1 ein Fließschema, das zur näheren Erläuterung des Verfahrensbeispieles dient und

Fig. 2 die vereinfachte schematische Darstellung einer Kolonne, die zur Durchführung des erfindungsgemässen Verfahrens gut geeignet ist.

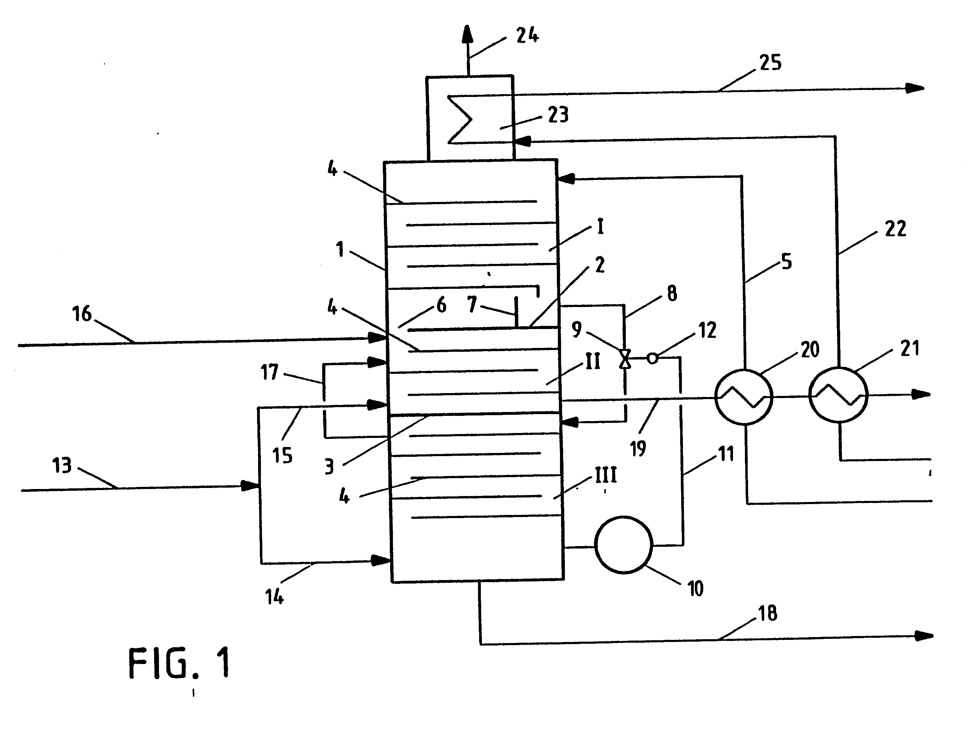

Im Fließschema in Fig. 1 besteht die zur Durchführung des erfindungsgemässen Verfahrens eingesetzte Kolonne 1 aus drei übereinander angeordneten Teilen I, II und III. Der oberste Teil I ist dabei von dem darunter liegenden Teil II durch den Gas- und flüssigkeitsdurchlässigen Boden 2 getrennt, während Teil II von dem darunter liegenden Teil III durch einen undurchlässigen Boden 3 abgetrennt ist. Die einzelnen Teile der Kolonne 1 sind in an sich bekannter Weise mit Einbauten (Böden) 4 versehen. Das Bezugszeichen 4 ist dabei jeweils nur an einer Stelle eines jeden Kolonnenteiles angebracht. Die Darstellung in Fig. 1 lässt jedoch klar erkennen, wie die Einbauten (Böden) jeweils übereinander angeordnet sind. Die aufzuarbeitende Einzatzlösung wird über die Leitung 5 am Kopf der Kolonne 1 auf den obersten Teil I aufgegeben. Im vorliegenden Verfahrensbeispiel handelt es sich bei der Einsatzlösung um die angereicherte Waschlösung, die beim Auswaschen des Ammoniaks aus dem Koksofengas anfällt. Diese Einsatzlösung hat in etwa folgende Zusammensetzung:

| | | |
|---|---|---|
| NH$_3$, frei | 47 | Gew.-% |
| NH$_3$, gebunden | 8 | " |
| CO$_2$ | 18 | " |
| H$_2$S | 23 | " |
| HCN | 4 | " |

und wird in einer Menge von 30 000 kg/h sowie mit einer Temperatur von 70° C über die Leitung 5 auf die Kolonne 1 aufgegeben. Die aufgegebene Einsatzlösung kommt dabei zunächst mit den im Gegenstrom zur Lösung aufsteigenden Brüden und Abtreifbedampf in Berührung, wodurch freies Ammoniak aus der Lösung abgetrieben wird. Nach Passieren von Teil I der Kolonne 1 gelangt ein Teilstrom der Lösung über die Öffnung 6 im Boden 2 in den darunter liegenden Teil II, während der andere Teilstrom über Überlauf 7 und die Umgehungsleitung 8 in den Teil III der Kolonne 1 eingeleitet wird. Zur Steuerung dieses zweiten Teilstromes ist in der Umgehungsleitung 8 das Ventil 9 vorgesehen. Die Betätigung des Ventiles 9 kann dabei in Abhängigkeit von dem Flüssigkeitsstand erfolgen, der sich im Kolonnensumpf in Teil III einstellt. Hierbei wird der vom Messgerät 10 erfasste Flüssigkeitsstand als Regelgrösse benutzt und über die Impulsleitung 11 auf den Stellantrieb 12 übertragen, der eine Verstellung des Ventiles 9 in der Weise bewirkt, dass bei einem Absinken des Flüssigkeitsstandes unter einen vorgegebenen Sollwert das Ventil 9 weiter geöffnet wird, während umgekehrt bei einem Überschreiten dieses Sollwertes das Ventil 9 stärker gedrosselt wird.

Der erforderliche Abtreibedampf wird der Kolonne 1 über die Leitung 13 mit einer Temperatur von 127°C und einem Druck von 2,5 bar zugefürt. Von diesem Dampf werden 2 200 kg/h mit einem Druck von 2,5 bar und einer Temperatur von 127°C über die Leitung 14 von unten in Teil III der Kolonne eingeleitet. Weitere 3 500 kg/h Dampf werden mit einem Druck von 2,5 bar und einer Temperatur von 127°C über die Leitung 15 von unten in Teil II der Kolonne 1 eingeleitet. Zusätzlich werden auf Teil II 200 kg/h 50 %ige Natronlauge mit einer Temperatur von 30°C über die Leitung 16 aufgegeben. Ausserdem werden die in Teil III der Kolonne 1 aufsteigenden Brüden über die Umgehungsleitung 17 abgezogen und gelangen ebenfalls in Teil II, wo sie im mittleren Bereich dieses Teiles eingeleitet werden. Die sich im Sumpf der Kolonne 1 ansammelnde regenerierte Lösung wird über die Leitung 18 abgezogen und erneut als Waschlösung in der im Fliessschema nicht dargestellten Ammoniak-Wäsche der Koksofengasbehandlungsanlage eingezetzt. Hierbei werden insgesamt 12 900 kg/h regenerierte Lösung mit einer Temperatur von 109,5°C aus Teil III der Kolonne 1 abgezogen.

Die sich auf dem undurchlässigen Boden 3 ansammelnde Lösung wird über die Leitung 19 aus Teil II der Kolonne abgezogen. In dieser Leitung befinden sich die beiden Wärmetauscher 20 und 21, nach deren Passieren die Lösung bis auf etwa 33°C abgekühlt ist. Insgesamt werden 22 800 kg/h Lösung durch die Leitung 19 abgezogen und der im Fließschema nicht dargestellten Abwasserbehandlungsanlage zugeführt. Der Wärmetauscher 20 dient dabei der Vorwärmung der Einsatzlösung in der Leitung 5, die im indirekten Wärmetausch mit der in der Leitung 19 fliessenden Lösung von 30°C auf 70°C aufgewärmt wird. Im Wärmetauscher 21 erfolgt ein weiterer indirekter Wärmetausch zwischen der Lösung in der Leitung 19 und dem Kühlwasser in der Leitung 22. Dieses Kühlwasser ist für den auf die Kolonne aufgesetzten Kondensator 23 bestimmt, in dem die aus der Kolonne 1 aufsteigenden Ammoniak-Brüden bis auf eine Temperatur von 78°C abgekühlt werden.

Insgesamt werden durch die Leitung 24 Ammoniak-Brüden in einer Menge von 605 kg/h abgezogen. Diese Brüden haben in etwa folgende Zusammensetzung:

| | | |
|---|---|---|
| $NH_3$ | 52 | Vol.-% |
| $H_2O$ | 35 | " |
| $CO_2$ | 7 | " |
| $H_2S$ | 4 | " |
| HCN | 2 | " |

Bezogen auf die Einsatzlösung beträgt somit die Ammoniak-Ausbeute 98,4 %. Diese Brüden können danach ihrer weiteren Verwendung zugeführt werden. Durch die Leitung 25 wird das erwärmte Kühlwasser aus dem Kondensator 23 abgezogen.

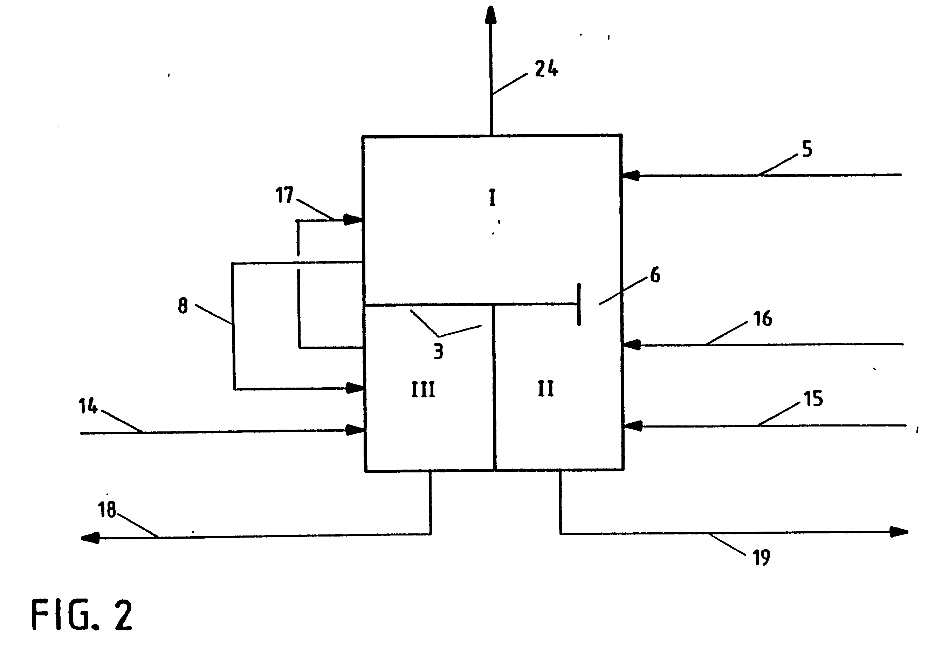

Die Kolonne in Fig. 2, die ebenfalls zur Durchführung des erfindungsgemässen Verfahrens gut geeignet ist, unterscheidet sich von der Kolonne 1 in Fig. 1 vor allem dadurch, dass hier die Teile II und III nicht übereinander sondern nebeneinander angeordnet sind. Diese Konstruktion ermöglicht eine besonders niedrige und kompakte Bauweise. Der undurchlässige Boden 3 besteht also hier aus einem waagerechten und einem senkrechten Teil, so dass Teil III der Kolonne völlig von den beiden benachbarten Teilen I und II getrennt ist. Die Verbindung zwischen Teil I und Teil II besteht auch hier über die Öffnung 6. Im Gegensatz zur Kolonne 1 in Fig. 1 gelangen die im Teil III aufsteigenden Brüden hier nicht in Teil II sondern werden über die Umgehungsleitung 17 in Teil I eingeleitet. Der Teilstrom der Einsatzlösung, welcher aus Teil I unmittelbar in Teil III eingeleitet werden soll, wird wiederum über die Umgehungsleitang 8 von einem Teil der Kolonne zum anderen transportiert. Auch im übrigen haben die übereinstimmenden Bezugszeichen in Fig. 2 die gleiche Bedeutung wie in Fig. 1, so dass sie keiner weiteren Erläuterung mehr bedürfen. Zur Vereinfachung der Darstellung in Fig. 2 sind in der Kolonne die Einbauten 4 nicht eingezeichnet, da es hier lediglich um die Darstellung des Konstruktionsprinzips geht. Es ist jedoch davon auszugehen, dass die Kolonne in der Praxis ebenfalls solche Einbauten aufweisen wird. Ebenso sind die im Fließschema in Fig. 1 vorgesehenen übrigen Einrichtungen in Fig. 2 nicht dargestellt. Es ist aber auch hier davon auszugehen, dass diese Einrichtungen bei der Kolonne gemäss Fig. 2 in entsprechender Weise zur Anwendung gelangen. Bei den Darstellungen in Fig. 1 und 2 handelt es sich, worauf bereits hingewiesen wurde, lediglich um schematische Darstellungen. Die vorliegenden Abmessungen lassen deshalb keine Rückschlüsse auf die tatsächlichen Verhältnisse in der Praxis zu. Das gilt insbesondere im Hinblick auf die Abmessungen der Teile I, II und III der Kolonne sowie auf die Zahl der vorhandenen Einbauten 4. Wegen des Einsatzes von Natronlauge muss Teil II der Kolonne natürlich aus einem hierfür geeigneten korrosionsbeständigen Material bestehen oder eine entsprechende Schutzauskleidung aufweisen.

Die Anwendbarkeit des erfindungsgemässen Verfahrens ist natürlich nicht auf die im Verfahrensbeispiel genannte Ammoniak-Waschlösung beschränkt. Das Verfahren kann selbstverständlich auch in allen anderen Fällen angewandt werden, in denen Einsatzlösungen mit vergleichbarer Zusammensetzung vorliegen. Die dabei zu erzielenden Vorteile lassen sich wie folgt zusammenfassen:

Durch das Arbeiten mit einer einzigen Kolonne anstelle von zwei Kolonnen werden natürlich die Anlagekosten und der Raumbedarf ganz beträchtlich herabgesetzt. Hierbei ist insbesondere auch zu berücksichtigen, dass beim erfindungsgemässen Verfahren nur Teil II der Kolonne mit einer laugeresistenten Schutzauskleidung versehen werden muss, während Teil I und Teil III in Normalausführung erstellt werden können. Bei der bisher bekannten Arbeitsweise waren dagegen beide Kolonnen mit einer entsprechenden Schutzauskleidung versehen. Ausserdem ist es beim erfindungsgemässen Verfahren möglich, die aus Teil III der Kolonne aufsteigenden Brüden für den Abtrieb des gebundenen Ammoniaks in Teil II der Kolonne mit zu nutzen.

**Patentansprüche**

1. Verfahren zum Abtreiben von freiem und gebundenem Ammoniak aus diese beiden Bestandteile enthaltenden wässrigen Lösungen, wobei das gebundene Ammoniak durch Behandlung mit Natronlauge in Freiheit gesetzt und das freie Ammoniak mit Wasserdampf und/oder Brüden aus der Lösung abgetrieben wird und wobei das Verfahren in mit geeigneten Einbauten versehenen Kolonnen durchgeführt wird, gekennzeichnet durch die Anwendung folgender Verfahrensmerkmale:

a) Die Behandlung der ammoniakhaltigen Einsatzlösung erfolgt in einer einzigen, aus drei Teilen bestehenden Kolonne, deren erster (oberster) Teil und darunterliegender zweiter Teil durch einen gas- und flüssigkeitsdurchlässigen Boden miteinander in Verbindung stehen, während der zweite und der dritte Teil durch einen undurchlässigen Boden voneinander getrennt sind;

b) die ammoniakhaltige Einsatzlösung wird am Kopf der Kolonne in den ersten Teil derselben eingeleitet und nach Passieren des ersten Teiles in zwei Teilströme zerlegt, von denen der eine Teilstrom unmittelbar in den darunter liegenden zweiten Teil der Kolonne fliesst, während der andere Teilstrom über eine Umgehungsleitung direkt auf den dritten Teil der Kolonne aufgegeben wird, wobei der Abtreibedampf in den dritten und zweiten Teil der Kolonne eingeleitet wird sowie im zweiten Teil zusätzlich die Aufgabe von Natronlauge erfolgt, und
c) die im dritten Teil der Kolonne aufsteigenden Brüden werden über eine Umgehungsleitung in den zweiten oder in den ersten Teil derselben eingeleitet, während die aus dem dritten Teil der Kolonne ablaufende regenerierte Lösung einer Wiederverwendung zugeführt und die aus dem zweiten Teil ablaufende Lösung nach entsprechender Abwasserbehandlung aus dem Verfahren abgestossen wird.

2. Verfahren nach Anspruch 1, dadurch gekennzeichnet, dass die Grösse des Teilstromes der Einsatzlösung, der vom ersten Teil der Kolonne direkt auf den dritten Teil der Kolonne aufgegeben wird, in Abhängigkeit vom Flüssigkeitsstand im Kolonnensumpf geregelt wird, wobei bei einem Absinken des Flüssigkeitsstandes die Zufuhr von Einsatzlösung erhöht wird, während bei einem unerwünschten Ansteigen des Flüssigkeitsspiegels die Zufuhr von Einsatzlösung gedrosselt wird.

3. Verfahren nach den Ansprüchen 1 und 2, dadurch gekennzeichnet, dass die Einsatzlösung mit einer Temperatur von mindestens 70° C auf die Kolonne aufgegeben wird, wobei die Vorwärmung der Einsatzlösung im indirekten Wärmetausch mit der aus Teil II der Kolonne abgezogenen Lösung erfolgt.

## Claims

1. Process for stripping free and combined ammonia from aqueous solutions containing these two components, in which the combined ammonia is liberated by treatment with caustic soda and the free ammonia is stripped from the solution with steam and/or exhaust vapours and in which the process is carried out in columns fitted with suitable internals, characterized by the use of the following process features:
a) The treatment of the ammoniacal feed solution is carried out in a single column consisting of three sections, of which the first (top) section and the second section below it are connected by a plate which is permeable to gas and liquid while the second and third sections are separated from each other by an impermeable plate:
b) the ammoniacal feed solution is introduced at the head of the column into the first section of the same and after passing through the first section is divided into two component streams of which one component stream flows directly into the second section below while the other component stream is fed directly into the third section of the column via a by-pass line, in which the stripping vapour is introduced into the third and second sections of the column and the caustic soda is also fed into the second section, and
c) the vapours rising in the third section of the column are introduced via a by-pass line into the second or the first sections of the same, while the regenerated solution leaving the third section of the column is transferred for re-use and the solution leaving the second section is rejected from the process after appropriate waste water treatment.

2. Process according to Claim 1, characterized in that the size of the component stream of the feed solution which is fed directly from the first section of the column to the third section of the column is controlled as a function of the liquid level in the column sump, in which the supply of feed solution is increased if there is a reduction in the liquid level and the supply of feed solution is restricted if there is an unwanted increase in the liquid level.

3. Process according to Claims 1 and 2, characterized in that the feed solution is fed to the column at a temperature of at least 70°C, in which the feed solution is pre-heated by indirect heat exchange with the solution withdrawn from section II of the column.

## Revendications

1. Procédé pour chasser l'ammoniac libre et lié de solutions aqueuses renfermant ces deux constituants, tandis que l'ammoniac lié est mis en liberté par traitement avec une solution d'hydroxyde de sodium et que l'ammoniac libre est chassé de la solution avec de la vapeur d'eau et/ou des buées chaudes et que le procédé est mis en oeuvre dans des colonnes pourvues d'infrastructures appropriées, ledit procédé étant remarquable par l'utilisation des caractéristiques opératoires suivantes:
a) le traitement de la solution mise en oeuvre et renfermant de l'ammoniac a lieu dans une colonne unique constituée par trois parties dont la première partie (supérieure) et la seconde partie, située au-dessous, sont en liaison mutuelle par un plateau perméable aux gaz et aux liquides, tandis que la seconde et la troisième partie sont séparées l'une de l'autre par un plateau imperméable
b) la solution mise en oeuvre et renfermant de l'ammoniac est introduite à la tête de la colonne dans la première partie de celle-ci et, après avoir traversé cette première partie, elle est décomposée en deux courants partiels dont l'un s'écoule directement dans la seconde partie (située audessous) de la colonne, tandis que l'autre courant partiel est délivré directement, par une conduite de dérivation, à la troisième partie de la colonne, la vapeur d'expulsion étant introduite dans la troisième et la seconde partie de la colonne et qu'en plus une addition d'une solution d'hydroxyde de sodium a également lieu dans la seconde partie, et
c) les buées chaudes s'élevant dans la troisième partie de la colonne sont introduites, par une conduite de dérivation, dans la seconde partie ou dans la première partie de ladite

**0 103 674**

colonne, tandis que la solution régénérée s'écoulant de la troisième partie de la colonne est envoyée à une nouvelle utilisation et que la solution s'écoulant de la seconde partie de la colonne est, après un traitement correspondant des eaux usées, évacuée du procédé.

2. Procédé selon la revendication 1, caractérisé par le fait que l'importance du courant partiel de la solution mise en oeuvre, courant qui est délivré directement de la première partie de la colonne à la troisième partie de celle-ci, est réglée en fonction de l'état du liquide dans le pied de la colonne, tandis que lors d'un abaissement du niveau du liquide, l'apport de solution mise en oeuvre est accru, tandis que lors d'une montée indésirable du niveau du liquide, l'apport de solution mise en oeuvre est étranglé.

3. Procédé selon les revendications 1 et 2, caractérisé par le fait que la solution mise en oeuvre est délivrée à la colonne à une température de 70° C au moins, le préchauffage de la solution mise en oeuvre ayant lieu par échange indirect de chaleur avec la solution soutirée de la partie II de la colonne.

FIG. 1

FIG. 2

0 103 674